(19) Europäisches Patentamt
European Patent Office
Office européen des brevets

(11) **EP 3 629 055 B1**

(12) **EUROPEAN PATENT SPECIFICATION**

(45) Date of publication and mention
of the grant of the patent:
**03.08.2022 Bulletin 2022/31**

(21) Application number: **19194567.4**

(22) Date of filing: **30.08.2019**

(51) International Patent Classification (IPC):
*G01S 7/493* (2006.01)      *G01S 17/42* (2006.01)
*G01S 17/36* (2006.01)      *G01S 17/894* (2020.01)
*G06T 5/00* (2006.01)      *G06T 5/50* (2006.01)

(52) Cooperative Patent Classification (CPC):
**G01S 7/493; G01S 17/36; G01S 17/894;
G06T 5/002; G06T 5/50;** G06T 2207/10028;
G06T 2207/20028

(54) **METHOD AND APPARATUS FOR ACQUIRING DEPTH IMAGE, AND ELECTRONIC DEVICE**

VERFAHREN UND VORRICHTUNG ZUR AUFNAHME VON TIEFENBILDERN UND
ELEKTRONISCHE VORRICHTUNG

PROCÉDÉ ET APPAREIL D'ACQUISITION D'IMAGE DE PROFONDEUR ET DISPOSITIF
ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2018 CN 201811124929**

(43) Date of publication of application:
**01.04.2020 Bulletin 2020/14**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventor: **CHEN, Yan
Dongguan, Guangdong 523860 (CN)**

(74) Representative: **Mewburn Ellis LLP
Aurora Building
Counterslip
Bristol BS1 6BX (GB)**

(56) References cited:
**WO-A1-2018/042887      US-A1- 2011 285 910**

• **CAI JIJI ET AL: "Boundary-Preserving Depth
Upsampling Without Texture Copying Artifacts
and Holes", 2017 IEEE INTERNATIONAL
SYMPOSIUM ON MULTIMEDIA (ISM), IEEE, 11
December 2017 (2017-12-11), pages 1-5,
XP033291451, DOI: 10.1109/ISM.2017.11**

## Description

TECHNICAL FIELD

The disclosure relates to the field of imaging technology, and more particularly to a method for acquiring a depth image, an apparatus for acquiring a depth image, and an electronic device.

BACKGROUND

In the related art, a depth image formed by a time of flight (TOF) depth camera has problems such as low accuracy, low resolution, and poor image quality, thereby making it difficult to obtain depth information of high accuracy. WO2018/042887A1 enhances the image quality of a depth map in a distance measurement device that receives intermittent light. In a pixel array unit, a plurality of pixels for receiving prescribed intermittent light are arranged in a two-dimensional lattice shape. A continuous-light-image data generation unit generates continuous-light-image data (IR) in which a plurality of items of image data indicating prescribed continuous light luminances for the plurality of pixels are arranged in a two-dimensional lattice shape on the basis of light reception data (Q1-Q4) for the plurality of pixels. A depth map generation unit generates, from the light reception data (Q1-Q4) and continuous-light-image data (IR), a depth map (D) comprising an arrangement of distance information corresponding to the plurality of pixels.

In CAI JIJI et al: "Boundary-Preserving depth Upsampling Without Texture Copying Artifacts and Holes", boundary-preserving depth upsampling without texture copying artifacts and holes is proposed. Since high-resolution (HR) color images contain many edges and textures, they inevitably cause artifacts such as texture copying when they are used in depth upsampling. Thus, we perform rolling guidance filtering on HR color images before depth upsampling to preserve object boundaries in depth maps while successfully removing texture copying artifacts. Moreover, upsampled depth maps are often corrupted by noise and contain holes along object boundaries. Thus, we utilize fast weighted median filtering after depth upsampling to remove noise and fill holes. Experimental results demonstrate that the proposed method achieves boundary-preserving depth upsampling results without texture copying artifacts and holes through visual and quantitative evaluations.

In US2011/285910A1, RGB-Z imaging systems acquire RGB data typically with a high X-Y resolution RGB pixel array, and acquire Z-depth data with an array of physically larger Z pixels having additive signal properties. In each acquired frame, RGB pixels are mapped to a corresponding Z pixel. Z image resolution is enhanced by identifying Z discontinuities and identifying corresponding RGB pixels where the Z discontinuities occur. Thus segmented data enables RGB background substitution, which preferably blends foreground pixel color and substitute background color. The segmented data also enables up-sampling in which a higher XY resolution Z image with accurate Z values is obtained. Up-sampling uses an equation set enabling assignment of accurate Z values to RGB pixels. Fixed acquisition frame rates are enabled by carefully culling bad Z data. Segmenting and up-sampling enhanced video effects and enable low cost, low Z resolution arrays to function comparably to higher quality, higher resolution Z arrays.

SUMMARY

Implementations of the present disclosure provide a method for acquiring a depth image, an apparatus for acquiring a depth image, and an electronic device.

The invention is defined by the independent claims. The method for acquiring a depth image of the implementations of the disclosure includes the following. Light is emitted to a target object. Light reflected by the target object is received and sampling is performed a number of times, to obtain multiple phase maps. The multiple phase maps are filtered, to obtain multiple filtered phase maps. The depth image is formed according to the multiple filtered phase maps. Filtering the plurality of phase maps includes: obtaining an amplitude map according to the plurality of phase maps; obtaining a confidence map by filtering the amplitude map; filtering the plurality of phase maps by employing a joint bilateral filtering scheme and using the confidence map as a guiding map. Filtering the plurality of phase maps by employing the joint bilateral filtering scheme and using the confidence map as the guiding map includes: segmenting each of the plurality of phase maps into a low confidence map and a high confidence map according to the confidence map; filtering the high confidence map obtained from each of the plurality of phase maps with the joint bilateral filtering scheme to obtain a filtered high confidence map, wherein each of the plurality of filtered phase maps is obtained by processing the low confidence map obtained from each of the plurality of phase maps and the filtered high confidence map that corresponds to each of the plurality of phase maps.

The apparatus for acquiring a depth image of the implementations of the disclosure includes a light emitter, a light receiver, and a processor. The light emitter is configured to emit light to a target object. The light receiver is configured to receive light reflected back by the target object and perform sampling a number of times, to obtain multiple phase maps. The processor is configured to filter the multiple phase maps and form the depth image according to the multiple filtered phase maps as in the above method.

The electronic device of the implementations of the disclosure includes a casing and the above apparatus for acquiring a depth image received in the casing.

## BRIEF DESCRIPTION OF THE DRAWINGS

The above and/or further aspects and advantages of the present disclosure will be apparent and readily understood from the description of the embodiments in conjunction with the accompanying drawings.

FIG. 1 is a schematic flowchart illustrating a method for acquiring a depth image.

FIG. 2 is a schematic diagram illustrating an apparatus for acquiring a depth image.

FIG. 3 is a schematic diagram illustrating phase maps and an amplitude map.

FIG. 4 to FIG. 7 are schematic flowcharts illustrating methods for acquiring a depth image.

FIG. 8 and FIG. 9 are schematic diagrams illustrating application of a method for acquiring a depth image.

FIG. 10 is a schematic flowchart illustrating a method for acquiring a depth image.

FIG. 11 is a schematic plan view of an electronic device.

FIG. 12 is a schematic diagram of connection between a computer readable storage medium and an electronic device.

## DETAILED DESCRIPTION

Embodiments of the present disclosure are described in detail below. Examples of the embodiments are illustrated in the drawings, in which the same or similar reference numerals indicate the same or similar elements or elements having the same or similar functions.

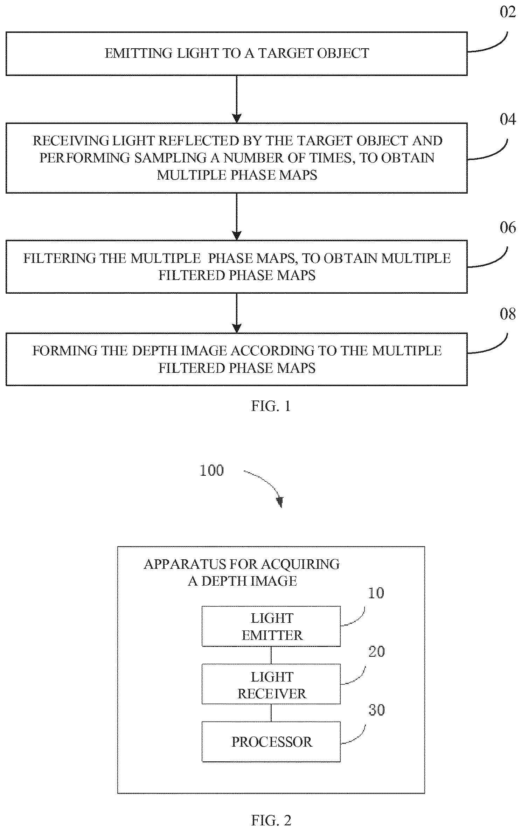

Referring to FIG. 1, an overview of a method for acquiring a depth image according to the invention includes the following.

At operation 02, light is emitted to a target object.

At operation 04, light reflected by the target object is received and sampling is performed a number of times, to obtain multiple phase maps.

At operation 06, the multiple phase maps are filtered to obtain multiple filtered phase maps.

At operation 08, the depth image is formed according to the multiple filtered phase maps.

Referring to FIG. 2, an apparatus 100 for acquiring a depth image includes a light emitter 10, a light receiver 20, and a processor 30. The light emitter 10 is configured to emit light to a target object. The light receiver 20 is configured to receive light reflected back by the target object and perform sampling a number of times, to obtain multiple phase maps. The processor 30 is configured to filter the multiple phase maps to obtain multiple filtered phase maps and form the depth image according to the multiple filtered phase maps.

That is, in the invention, the method for acquiring a depth image is implemented with the apparatus 100 for acquiring a depth image, where the operation 02 is implemented with the light emitter 10, the operation 04 is implemented with the light receiver 20, and the operations 06 and 08 is implemented with the processor 30.

In some examples, the apparatus 100 for acquiring a depth image is, for example, a time of flight (TOF) depth camera. The TOF depth camera can calculate and obtain the depth image by performing sampling two or four times. Accordingly, the multiple phase maps may be at least two phase maps, such as two phase maps, four phase maps, and the like. The implementation of the disclosure takes a manner in which four phase maps are obtained by performing sampling four times as an example. In this example, after the light emitter 10 emits laser light into the scene, the light receiver 20 can receive light reflected and perform sampling four times to obtain four phase maps. The sampling is performed once every 90 degrees, for example, phases corresponding to the four phase maps are 0 degrees, 90 degrees, 180 degrees, and 270 degrees, respectively. Furthermore, pixels of the four phase maps are in one-to-one correspondence.

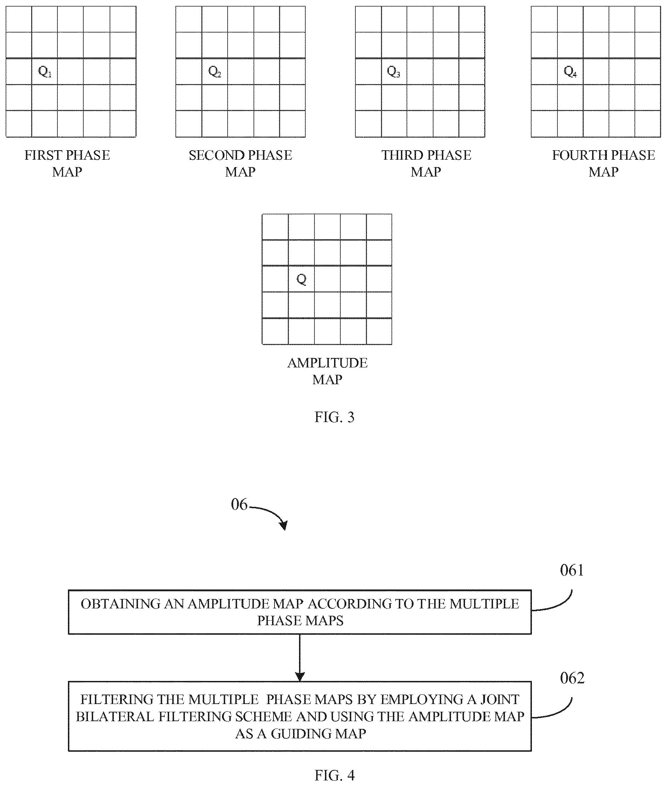

Referring to FIG. 3, the four phase maps are respectively referred to as a first phase map, a second phase map, a third phase map, and a fourth phase map. In the related art, without filtering the four phase maps, depth information of the depth image is obtained as follows. A phase difference between the light emitted and the light reflected is $\varphi = arctan(\frac{Q_3-Q_4}{Q_1-Q_2})$ , where $Q_1$ can be a pixel value of a pixel of the first phase map, $Q_2$ can be a pixel value of a pixel of the second phase map, where the pixel of the second phase map locates at a position of the second phase map the same as a position of the first phase map where the pixel of the first phase map locates, $Q_3$ can be a pixel value of a pixel, which locates at the same location as the pixel of the first phase map, of the third phase map, and $Q_4$ can be a pixel value of a pixel , which locates at the same location as the pixel of the first phase map, of the fourth phase map. Hence, depth information of the scene corresponding to the pixel of the first phase map is $d = \frac{c}{2f} \bullet \frac{\varphi}{2\pi}$ , where c is the speed of light and $f$ is the light-emitting frequency (modulation frequency) of a laser. For example, the pixel of the first phase map locates at an upper left position of the first phase map, the pixel of the second phase map locates an upper left position of the second phase map, the pixel of the third phase map locates at an upper left position of the third phase map, and the pixel of the fourth phase map locates at an upper left position of the fourth phase map.

However, a depth image formed by the TOF depth camera has problems such as low accuracy, low resolution, and poor image quality, thereby making it difficult to obtain depth information of high accuracy. Therefore, in the implementations of the disclosure, according to the method for acquiring a depth image and the apparatus 100 for acquiring a depth image, the multiple phase maps are filtered, such that the depth image formed according to the multiple filtered phase maps has higher accuracy, and thus the depth information of higher accuracy can be obtained. Furthermore, in the implementations of the disclosure, according to the method for acquiring a depth image and the apparatus 100 for acquiring a depth image, the multiple phase maps are filtered. Since the multiple phase maps contain more original data, this filtering manner is closer to the hardware layer, and the depth image formed according to the multiple filtered phase maps is more accurate.

In some examples, the multiple phase maps can be filtered with a joint bilateral filtering scheme, a trilateral filtering scheme, a guided filtering scheme, and the like. In the implementations of the disclosure, the multiple phase maps are filtered with the joint bilateral filtering scheme for illustration.

Referring to FIG. 4, in some implementations, the operation 06 includes the following.

At operation 061, an amplitude map is obtained according to the multiple phase maps.

At operation 062, the multiple phase maps are filtered by employing the joint bilateral filtering scheme and using the amplitude map as a guiding map.

Returning to FIG. 2, in some implementations, the processor 30 is configured to obtain the amplitude map according to the multiple phase maps, and to filter the multiple phase maps by employing the joint bilateral filtering scheme and using the amplitude map as the guiding map.

That is, the operations 061 and 062 can be implemented with the processor 30.

In an example, when filtering the multiple phase maps with the joint bilateral filtering scheme, the joint bilateral filtering scheme determines a weight of the filtering by using the guiding map. The guiding map is for guiding the filtering, such as providing information for indicating which portions are edges and which portions are areas. Therefore, in the implementations of the disclosure, the amplitude map is obtained according to the multiple phase maps, and is used as the guiding map for the joint bilateral filtering scheme. The joint bilateral filtering scheme can effectively filter out noise (such as Gaussian white noise) in each of the multiple phase maps, so that pixels of the depth image generated are accurately distributed in a depth direction.

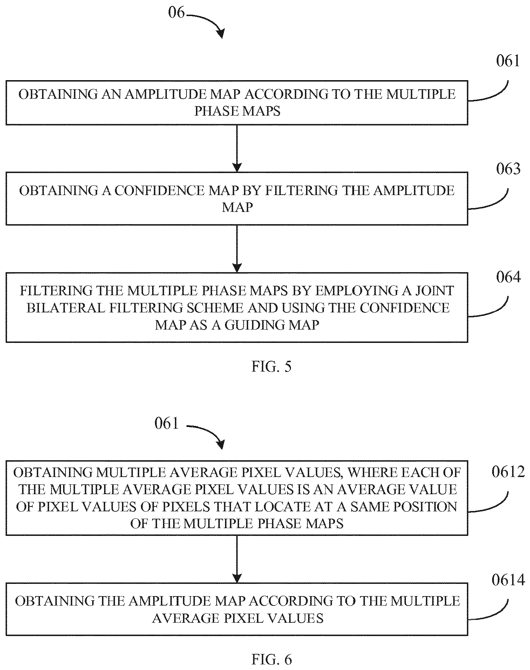

Referring to FIG. 5, in the invention, the operation 06 includes the following.

At 061, an amplitude map is obtained according to the multiple phase maps.

At 063, a confidence map is obtained by filtering the amplitude map.

At 064, the multiple phase maps are filtered by employing the joint bilateral filtering scheme and using the confidence map as a guiding map.

Returning to FIG. 2, the processor 30 is configured to obtain the amplitude map according to the multiple phase maps, to obtain the confidence map by filtering the amplitude map, and to filter the multiple phase maps by employing the joint bilateral filtering scheme and using the confidence map as the guiding map.

That is, the operations 061, 063, and 064 are implemented with the processor 30.

In an example, since there may be noise in the multiple phase maps, the amplitude map obtained according to the multiple phase maps may also have noise, and therefore, the amplitude map can be filtered to obtain the confidence map with less noise compared with the amplitude map. In this way, the confidence map is more accurate, and thus the more accurate confidence map can be used as the guiding map to achieve better filtering of the multiple phase maps with the joint bilateral filtering scheme. In this example, Gaussian filtering can be used to filter the amplitude map to obtain the confidence map.

Referring to FIG. 6, in some implementations, the operation 061 includes the following.

At operation 0612, multiple average pixel values are obtained, where each of the multiple average pixel values is an average value of pixel values of pixels that locate at a same position of the multiple phase maps.

At operation 0614, the amplitude map is obtained according to the multiple average pixel values.

Returning to FIG. 2, in some implementations, the processor 30 is configured to obtain the multiple average values, and to obtain the amplitude map according to the multiple pixel average values, where each average pixel value is an average value of pixel values of pixels that locate at a same position of the multiple phase maps.

That is, the operations 0612 and 0614 can be implemented with the processor 30.

Returning to FIG. 3, in an example, the multiple phase maps are in one-to-one correspondence, and an average value of pixel values of pixels that locate at a same location of the four phase maps may be obtained as an average pixel value in this location, for example, the average pixel value $Q = \frac{Q_1+Q_2+Q_3+Q_4}{4}$. The amplitude map and each of the four phase maps are also in one-to-one correspondence, and the average pixel value is regarded as a pixel value of a pixel that locates at this location of the amplitude map. The amplitude map can be obtained by acquiring pixel values of all pixels of the amplitude map according to the above operations 0612 and 0614.

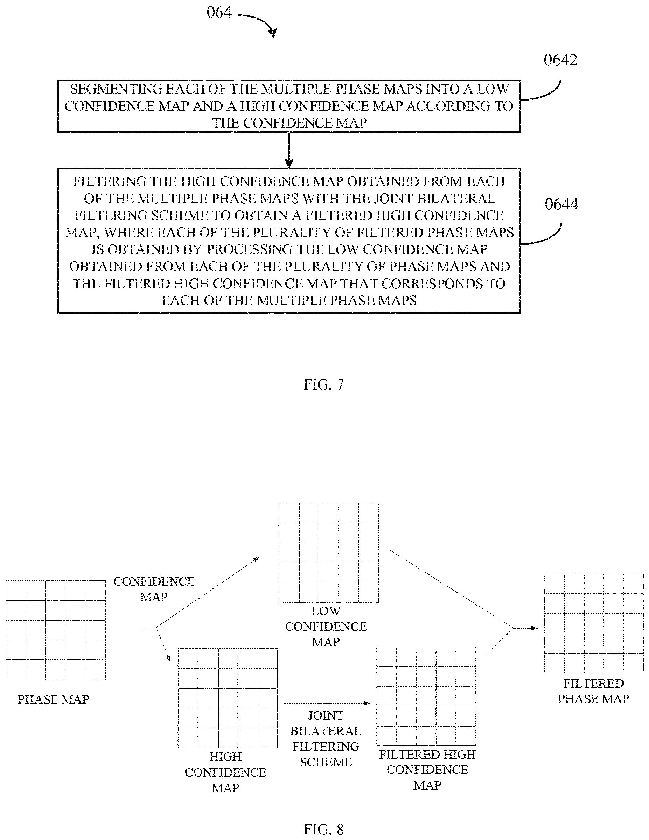

Referring to FIG. 7, in the invention, the operation 064 includes the following.

At operation 0642, each of the multiple phase maps is segmented into a low confidence map and a high confidence map according to the confidence map.

At operation 0644, the high confidence map obtained from each of the multiple phase maps is filtered with the joint bilateral filtering scheme, to obtain a filtered high confidence map, where each of the plurality of filtered phase maps is obtained by processing the low confidence map obtained from each of the plurality of phase maps and the filtered high confidence map that corresponds to each of the multiple phase maps.

Returning to FIG. 2, the processor 30 is configured to segment each of the multiple phase maps into the low confidence map and the high confidence map according to the confidence map, to filter the high confidence map obtained from each of the multiple phase maps with the joint bilateral filtering scheme, to obtain a filtered high confidence map, where each of the plurality of filtered phase maps is obtained by processing the low confidence map obtained from each of the plurality of phase maps and the filtered high confidence map that corresponds to each of the multiple phase maps.

That is, the operations 0642 and 0644 can be implemented with the processor 30.

In an example, a confidence threshold can be set, and a pixel value of each pixel of the confidence map is compared with the confidence threshold. When the pixel value of one pixel of the confidence map is greater than or equal to the confidence threshold, confidence of the pixel is determined to be relatively high. When the pixel value of one pixel of the confidence map is less than the confidence threshold, confidence of the pixel is determined to be relatively low. In this way, multiple pixels of the confidence map can be divided into pixels with high confidence and pixels with low confidence, where each of the pixels with high confidence has a pixel value greater than or equal to the confidence threshold, and each of the pixels with low confidence has a pixel value smaller than the confidence threshold. Aliasing of the pixels with low confidence is serious. The aliasing is described as follows. When an actual distance is greater than the maximum distance that the apparatus 100 for acquiring a depth image can measure, a distance that the apparatus 100 can measure is indistinguishable. For example, when the maximum distance that the apparatus 100 for acquiring a depth image can measure is 1.5 meters and the actual distance is 1.6 meters, a distance measured by the apparatus 100 for acquiring a depth image is 0.1 meter.

Referring to FIG. 8, since the aliasing is likely to cause a large error in the multiple filtered phase maps, with the confidence map, an image area of each of the multiple phase maps having pixels that correspond to the pixels with low confidence is determined to be the low confidence map, and an image area of each of the multiple phase maps having pixels that correspond to the pixels with high confidence is determined to be the high confidence map. The high confidence map obtained from each of the multiple phase maps is filtered with the joint bilateral filtering scheme, and the low confidence map obtained from each of the multiple phase maps and the filtered high confidence map are spliced to obtain each of the multiple filtered phase maps. In this way, by segmenting out the low confidence map having serious aliasing, the high confidence map can be filtered accurately, so that each of the multiple phase maps formed by the low confidence map and the filtered high confidence map can be accurate.

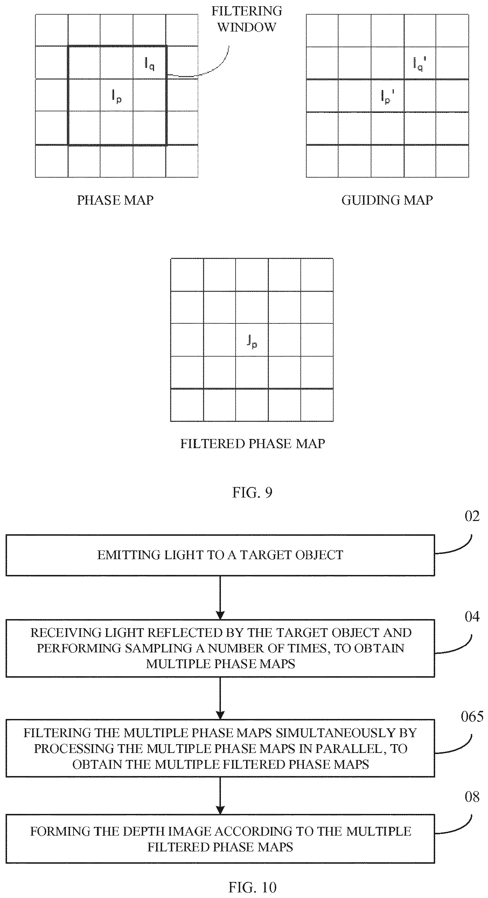

Referring to FIG. 9, in some implementations, the joint bilateral filtering scheme is defined as:

$$J_p = \frac{1}{k_p} \sum_{q \in \Omega} I_q f(||p - q||) g(||I_p' - I_q'||)$$,

where $k_p = \Sigma_{q \in \Omega} f(||p - q||) g(||I_p' - I_q'||)$, $J_p$ is an output pixel value, $k_p$ is a sum of weights, $\Omega$ is a filtering window, p is a coordinate of a pixel to-be-filtered of one of the multiple phase maps, q is a coordinate of a pixel of the one of the multiple phase maps that locates within the filtering window, $I_q$ is a pixel value of the pixel indicated by q, $I_p'$ is a pixel value of a pixel of the guiding map that corresponds to the pixel to-be-filtered, $I_q'$ is a pixel value of a pixel of the guiding map that corresponds to the pixel indicated by q, and f and g are weight distribution functions, where the weight distribution functions include a Gaussian function.

In an example, with the joint bilateral filtering scheme, according to a difference between the coordinate of the pixel to-be-filtered (the pixel to-be-filtered indicated by p) and the coordinate of the pixel (the pixel indicated by q) that locates within the filtering window, a first weight ($f(||p - q||)$) is determined. For example, as illustrated in FIG. 9, the difference between the coordinate of the pixel to-be-filtered indicated by p and the coordinate of the pixel indicated by q can be 2. According to a difference between the pixel value $I_p'$ of the pixel of the guiding map that corresponds to the pixel to-be-filtered indicated by p and the pixel value $I_q'$ of the pixel of the guiding map that corresponds to the pixel indicated by q, a second weight ($g(||I_p' - I_q'||)$) is determined. The output pixel value $J_p$ is determined according to the first weight and the second weight of each pixel that locates within the filtering window, the pixel value $I_q$ of the pixel indicated by q of one of the multiple phase maps, and the sum of weights indicated by $k_p$.

In some examples, f and g can be any weight distribution function, and can be the same or different. In the implementations of the disclosure, both f and g are Gaussian functions, and the Gaussian function is, for example, $f(x) = ae^{-(x-b)^2/2c^2}$, and a, b, and c are adjustment coefficients.

Referring to FIG. 10, in some implementations, the operation 06 includes the following.

At 065, the multiple phase maps are filtered simultaneously by processing the multiple phase maps in parallel, to obtain the multiple filtered phase maps.

Returning to FIG. 2, in some implementations, the processor 30 is configured to filter the multiple phase maps simultaneously by processing the multiple phase maps in parallel, to obtain the multiple filtered phase maps.

That is, the operation 065 can be implemented with the processor 30.

Since there are multiple phase maps, to improve the efficiency of filtering the multiple phase maps, the multiple phase maps can be processed in parallel to simultaneously filter the multiple phase maps. The multiple phase maps can be processed in parallel with open-CL, a digital signal processor (DSP), or the like, which is not limited herein.

In some examples, after the depth image is formed, the depth image can further be subjected to anti-aliasing, mean filtering, and the like. The mean filtering can filter out salt and pepper noise in the depth image, so that the depth information of the depth image can be more accurate.

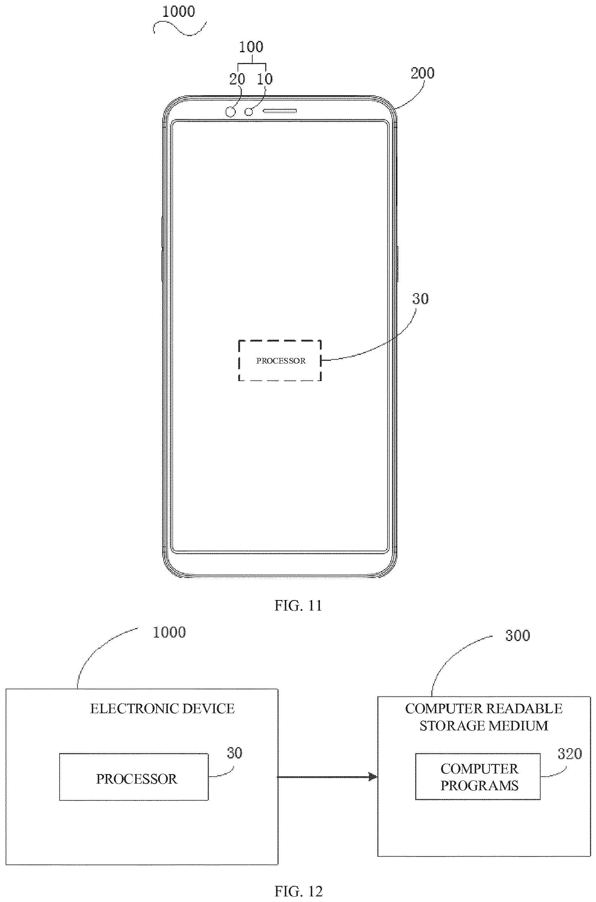

Referring to FIG. 11, an electronic device 1000 of implementations of the disclosure can include the apparatus 100 for acquiring a depth image of any of the above implementations. Furthermore, the electronic device 1000 further includes a casing 200. The apparatus 100 for acquiring a depth image is received in the casing 200. The casing 200 can provide the apparatus 100 for acquiring a depth image with protection against dust, water, and fall. The casing 200 defines a hole corresponding to the apparatus 100 for acquiring a depth image, to allow light to pass through the casing 200 via the hole. In another example, the apparatus 100 for acquiring a depth image is retracted into the casing 200 and can be stretched out of the casing 200. With this configuration, there is no need for the casing 200 to define a hole in a direction in which the light enters and exits the apparatus 100 for acquiring a depth image. When the apparatus 100 for acquiring a depth image is required to be used, the apparatus 100 for acquiring a depth image is stretched out of the casing 200; when the apparatus 100 for acquiring a depth image is not required to be used, the apparatus 100 for acquiring a depth image is retracted into the casing 200. In still another example, the apparatus 100 for acquiring a depth image is received in the casing 200 and located below a display screen. With this configuration, there is also no need for the casing 200 to define the hole in the direction in which the light enters and exits the apparatus 100 for acquiring a depth image.

The electronic device 1000 can be a mobile phone, a tablet computer, a smart wearable device (a smart watch, a smart wristband, a smart eyeglass, a smart helmet), a drone, etc., and is not limited herein.

Referring to FIG. 12, the disclosure further provides a computer readable storage medium 300. The computer readable storage medium 300 includes computer programs 320 operable with the electronic device 1000. The computer programs 320 are configured to be executed by the processor 30 to perform the method for acquiring a depth image of any of the above implementations.

In an example, with reference to FIG. 1 and FIG. 12, the computer programs 320 can be executed by the processor 30 to implement the following operations.

At operation 02, light is emitted to a target object.

At operation 04, light reflected by the target object is received and sampling is performed a number of times, to obtain multiple phase maps.

At operation 06, the multiple phase maps are filtered, to obtain multiple filtered phase maps.

At operation 08, the depth image is formed according to the multiple filtered phase maps.

In another example, with reference to FIG. 4 and FIG. 12, the computer programs 320 can further be executed by the processor 30 to implement the following operations.

At operation 061, an amplitude map is obtained according to the multiple phase maps.

At operation 062, the multiple phase maps are filtered by employing a joint bilateral filtering scheme and using the amplitude map as a guiding map.

Any process or method description in the flowcharts or otherwise described herein may be understood to represent a module, segment, or portion of code that includes one or more executable instructions for implementing the operations of a particular logical function or process. Further implementations are included in the scope of the preferred embodiments of the disclosure.

## Claims

1. A method for acquiring a depth image, comprising:

> emitting (02) light to a target object;
> receiving (04) light reflected by the target object and performing (04) sampling a number of times, to obtain a plurality of phase maps;
> filtering (06) the plurality of phase maps to obtain a plurality of filtered phase maps; and
> forming (08) the depth image according to the plurality of filtered phase maps; whereby filtering the plurality of phase maps comprises:
>
>> obtaining (061) an amplitude map according to the plurality of phase maps;
>> **characterised in that** filtering the plurality of phase maps further comprises: obtaining (063) a confidence map by filtering the amplitude map; and
>> filtering (064) the plurality of phase maps by employing a joint bilateral filtering scheme and using the confidence map as a guiding map;
>> wherein filtering the plurality of phase maps by employing the joint bilateral filtering scheme and using the confidence map as the guiding map comprises:

segmenting (0642) each of the plurality of phase maps into a low confidence map and a high confidence map according to the confidence map; and filtering (0644) the high confidence map obtained from each of the plurality of phase maps with the joint bilateral filtering scheme to obtain a filtered high confidence map, wherein each of the plurality of filtered phase maps is obtained by processing the low confidence map obtained from each of the plurality of phase maps and the filtered high confidence map that corresponds to each of the plurality of phase maps.

2. The method of claim 1, wherein obtaining the amplitude map according to the plurality of phase maps comprises:

obtaining (0612) a plurality of average pixel values, wherein each of the plurality average pixel values is an average value of pixel values of pixels that locate at a same position of the plurality of phase maps; and obtaining (0614) the amplitude map according to the plurality of average pixel values.

3. The method of claim 1, wherein segmenting each of the plurality of phase maps into the low confidence map and the high confidence map according to the confidence map comprises:

dividing a plurality of pixels of the confidence map into pixels with high confidence and pixels with low confidence, wherein each of the pixels with high confidence has a pixel value greater than or equal to a confidence threshold, and each of the pixels with low confidence has a pixel value smaller than the confidence threshold; determining an image area of each of the plurality of phase maps having pixels that correspond to the pixels with high confidence to be the high confidence map; and determining an image area of each of the plurality of phase maps having pixels that correspond to the pixels with low confidence to be the low confidence map.

4. The method of claim 1 or 3, further comprising: obtaining each of the plurality of filtered phase maps by splicing the low confidence map and the filtered high confidence map.

5. The method of any of claims 1-4, wherein the joint bilateral filtering scheme is defined as:

$$J_p = \frac{1}{k_p} \sum_{q \in \Omega} I_q f(||p - q||) g(||I_p' - I_q'||)\ ,$$

and wherein

$$k_p = \sum_{q \in \Omega} f(||p - q||) g(||I_p' - I_q'||),$$

$J_p$ is an output pixel value,
$k_p$ is a sum of weights,
$\Omega$ is a filtering window,
$p$ is a coordinate of a pixel to-be-filtered of one of the plurality of phase maps,
q is a coordinate of a pixel of the one of the plurality of phase maps that locates within the filtering window,
$I_q$ is a pixel value of the pixel indicated by q,
$I_p'$ is a pixel value of a pixel of the guiding map that corresponds to the pixel to-be-filtered indicated by p,
$I_q'$ is a pixel value of a pixel of the guiding map that corresponds to the pixel indicated by q, and
$f$ and g are weight distribution functions, wherein the weight distribution functions comprise a Gaussian function.

6. The method of claim 5, wherein the weights comprise a first weight $f(||p - q||)$ and a second weight $g(||I_p' - I_q'||)$, and wherein: the first weight $(f(||p - q||))$ is determined according to a difference between $p$ and q, and the second weight $(g(||I_p' - I_q'||))$ is determined according to a difference between the pixel value $I_p'$ and the pixel value $I_q'$.

7. The method of any of claims 1-6, further comprising: filtering (065) the plurality of phase maps simultaneously by processing the plurality of phase maps in parallel, whereby the plurality of filtered phase maps are obtained.

8. The method of any of claims 1-7, further comprising: performing at least one of anti-aliasing and mean filtering on the depth image.

9. An apparatus (100) for acquiring a depth image, comprising:

a light emitter (10), configured to emit light to a target object;
a light receiver (20), configured to receive light reflected back by the target object and perform sampling a number of times, to obtain a plurality of phase maps; and
a processor (30), configured to perform the method of any of claims 1-8.

10. An electronic device (1000) comprising:

a casing (200); and
an apparatus (100) received in the casing and comprising:

> a light emitter (10), configured to emit light to a target object;
> a light receiver (20), configured to receive light reflected back by the target object and perform sampling a number of times, to obtain a plurality of phase maps; and
> a processor (30), configured to perform the method of any of claims 1-8.

**11.** The electronic device of claim 10, wherein:

> the casing defines a hole; and
> the apparatus is able to be retracted into and stretched out of the casing via the hole.

**12.** The electronic device of claim 10 , further comprising a display screen, wherein the apparatus locates below the display screen.

**Patentansprüche**

**1.** Verfahren zum Erfassen eines Tiefenbilds, umfassend:

> Aussenden (02) von Licht auf ein Zielobjekt;
> Empfangen (04) von Licht, das von dem Zielobjekt reflektiert wird, und mehrmaliges Durchführen (04) von Abtastung, um eine Vielzahl von Phasenkarten zu erhalten;
> Filtern (06) der Vielzahl von Phasenkarten, um eine Vielzahl von gefilterten Phasenkarten zu erhalten; und
> Bilden (08) des Tiefenbilds gemäß der Vielzahl von gefilterten Phasenkarten;
> wobei Filtern der Vielzahl von Phasenkarten umfasst:
>
>> Erhalten (061) einer Amplitudenkarte gemäß der Vielzahl von Phasenkarten;
>> **dadurch gekennzeichnet, dass** Filtern der Vielzahl von Phasenkarten ferner umfasst:
>>
>>> Erhalten (063) einer Konfidenzkarte durch Filtern der Amplitudenkarte; und
>>> Filtern (064) der Vielzahl von Phasenkarten durch Anwenden eines gemeinsamen bilateralen Filterschemas und Verwenden der Konfidenzkarte als eine Leitkarte;
>>> wobei Filtern der Vielzahl von Phasenkarten durch Anwenden des gemeinsamen bilateralen Filterschemas und Verwenden der Konfidenzkarte als die Leitkarte umfasst:

> Segmentieren (0642) jeder der Vielzahl von Phasenkarten in eine Karte niedriger Konfidenz und eine Karte hoher Konfidenz gemäß der Konfidenzkarte; und
> Filtern (0644) der Karte hoher Konfidenz, die aus jeder der Vielzahl von Phasenkarten erhalten wurde, mit dem gemeinsamen bilateralen Filterschema, um eine gefilterte Karte hoher Konfidenz zu erhalten, wobei jede der Vielzahl von gefilterten Phasenkarten durch Verarbeiten der Karte niedriger Konfidenz, die aus jeder der Vielzahl von Phasenkarten erhalten wurde, und der gefilterten Karte hoher Konfidenz, die mit jeder der Vielzahl von Phasenkarten korrespondiert, erhalten wird.

**2.** Verfahren nach Anspruch 1, wobei Erhalten der Amplitudenkarte gemäß der Vielzahl von Phasenkarten umfasst:

> Erhalten (0612) einer Vielzahl von durchschnittlichen Bildpunktwerten, wobei jeder der Vielzahl von durchschnittlichen Bildpunktwerten ein Durchschnittswert von Bildpunktwerten von Bildpunkten ist, die sich an einer selben Position der Vielzahl von Phasenkarten befinden; und
> Erhalten (0614) der Amplitudenkarte gemäß der Vielzahl von durchschnittlichen Bildpunktwerten.

**3.** Verfahren nach Anspruch 1, wobei Segmentieren jeder der Vielzahl von Phasenkarten in die Karte niedriger Konfidenz und die Karte hoher Konfidenz gemäß der Konfidenzkarte umfasst:

> Aufteilen einer Vielzahl von Bildpunkten der Konfidenzkarte in Bildpunkte mit hoher Konfidenz und Bildpunkte mit niedriger Konfidenz, wobei jeder der Bildpunkte mit hoher Konfidenz einen Bildpunktwert aufweist, der größer als ein oder gleich einem Konfidenzschwellenwert ist, und jeder der Bildpunkte mit niedriger Konfidenz einen Bildpunktwert aufweist, der kleiner als der Konfidenzschwellenwert ist;
> Bestimmen eines Bildbereichs jeder der Vielzahl von Phasenkarten mit Bildpunkten, die mit den Bildpunkten mit hoher Konfidenz korrespondieren, die Karte hoher Konfidenz zu sein; und
> Bestimmen eines Bildbereichs jeder der Vielzahl von Phasenkarten mit Bildpunkten, die mit den Bildpunkten mit niedriger Konfidenz korrespondieren, die Karte niedriger Konfidenz zu sein.

4. Verfahren nach Anspruch 1 oder 3, ferner umfassend:
Erhalten jeder der Vielzahl von gefilterten Phasenkarten durch Spleißen der Karte niedriger Konfidenz und der gefilterten Karte hoher Konfidenz.

5. Verfahren nach einem der Ansprüche 1-4, wobei das gemeinsame bilaterale Filterschema definiert ist als:

$$J_p = \frac{1}{k_v} \sum_{q \in \Omega} I_q f(\|p - q\|) g(\|I_p' - I_q'\|) \quad,$$

und wobei

$$k_p = \sum_{q \in \Omega} f(\|p - q\|) g(\|I_p' - I_q'\|)$$

$J_p$ ein ausgegebener Bildpunktwert ist,
$k_p$ eine Summe von Gewichten ist,
$\Omega$ ein Filterungsfenster ist,
p eine Koordinate eines Bildpunkts, der zu filtern ist, einer der Vielzahl von Phasenkarten ist,
q eine Koordinate eines Bildpunkts der einen der Vielzahl von Phasenkarten, die sich innerhalb des Filterungsfensters befindet, ist,
$I_q$ ein Bildpunktwert des durch q angegebenen Bildpunkts ist,
$I_p'$ ein Bildpunktwert eines Bildpunkts der Leitkarte ist, der mit dem durch p angegebenen Bildpunkt korrespondiert, der zu filtern ist,
$I_q'$ ein Bildpunktwert eines Bildpunkts der Leitkarte ist, der mit dem durch q angegebenen Bildpunkt korrespondiert, und
f und g Gewichtsverteilungsfunktionen sind, wobei die Gewichtsverteilungsfunktionen eine Gaußsche Funktion umfassen.

6. Verfahren nach Anspruch 5, wobei die Gewichte ein erstes Gewicht $f(\|p - q\|)$ und ein zweites Gewicht $g(\|I_p' - I_q'\|)$ umfassen und wobei:

das erste Gewicht $f(\|p-q\|)$ gemäß einer Differenz zwischen p und q bestimmt wird und

das zweite Gewicht $g(\|I_p' - I_q'\|)$ gemäß einer Differenz zwischen dem Bildpunktwert $I_p'$ und dem Bildpunktwert $I_q'$ bestimmt wird.

7. Verfahren nach einem der Ansprüche 1-6, ferner umfassend:
gleichzeitiges Filtern (065) der Vielzahl von Phasenkarten durch paralleles Verarbeiten der Vielzahl von Phasenkarten, wobei die Vielzahl von gefilterten Phasenkarten erhalten wird.

8. Verfahren nach einem der Ansprüche 1-7, ferner umfassend:
Durchführen mindestens eines von Anti-Aliasing und Mittelwert-Filtern des Tiefenbilds.

9. Gerät (100) zum Erfassen eines Tiefenbilds, umfassend:

einen Lichtsender (10), konfiguriert zum Aussenden von Licht auf ein Zielobjekt;
einen Lichtempfänger (20), konfiguriert zum Empfangen von Licht, das von dem Zielobjekt zurückgeworfen wird, und mehrmaligem Durchführen von Abtastung, um eine Vielzahl von Phasenkarten zu erhalten; und
einen Prozessor (30), konfiguriert zum Durchführen eines Verfahrens nach einem der Ansprüche 1-8.

10. Elektronische Vorrichtung (1000), umfassend:

ein Gehäuse (200); und
ein Gerät (100), das in dem Gehäuse aufgenommen ist, und umfassend:

einen Lichtsender (10), konfiguriert zum Aussenden von Licht auf ein Zielobjekt;
einen Lichtempfänger (20), konfiguriert zum Empfangen von Licht, das von dem Zielobjekt zurückgeworfen wird, und mehrmaligem Durchführen von Abtastung, um eine Vielzahl von Phasenkarten zu erhalten; und
einen Prozessor (30), konfiguriert zum Durchführen eines Verfahrens nach einem der Ansprüche 1-8.

11. Elektronische Vorrichtung nach Anspruch 10, wobei:

das Gehäuse ein Loch definiert; und
das Gerät imstande ist, durch das Loch in das Gehäuse eingezogen und daraus herausgezogen zu werden.

12. Elektronische Vorrichtung nach Anspruch 10, ferner umfassend einen Anzeigebildschirm,
wobei sich das Gerät unter dem Anzeigebildschirm befindet.

**Revendications**

1. Procédé d'acquisition d'une image de profondeur comprenant:

l'émission (02) de lumière vers un objet cible ;

la réception (04) d'une lumière réfléchie par l'objet cible et la réalisation (04) d'un échantillonnage à plusieurs reprises, pour obtenir une pluralité de cartes de phase ;

le filtrage (06) de la pluralité de cartes de phase pour obtenir une pluralité de cartes de phase filtrées ; et

la formation (08) de l'image de profondeur conformément à la pluralité de cartes de phase filtrées ; par lequel

le filtrage de la pluralité de cartes de phase comprend :

l'obtention (061) d'une carte d'amplitude conformément à la pluralité de cartes de phase ;

**caractérisé en ce que** le filtrage de la pluralité de cartes de phase comprend en outre :

l'obtention (063) d'une carte de confiance par filtrage de la carte d'amplitude ; et

le filtrage (064) de la pluralité de cartes de phase en employant un mécanisme de filtrage bilatéral conjoint et en utilisant la carte de confiance comme carte directrice ;

dans lequel le filtrage de la pluralité de cartes de phase en employant le mécanisme de filtrage bilatéral conjoint et en utilisant la carte de confiance comme carte directrice comprend :

la segmentation (0642) de chacune de la pluralité de cartes de phase en une carte à faible niveau de confiance et une carte à haut niveau de confiance conformément à la carte de confiance ; et

le filtrage (0644) de la carte à haut niveau de confiance obtenue à partir de chacune de la pluralité de cartes de phase avec le mécanisme de filtrage bilatéral conjoint pour obtenir une carte à haut niveau de confiance filtrée, dans lequel chacune de la pluralité de cartes de phase filtrées est obtenue en traitant la carte à faible niveau de confiance obtenue à partir de chacune de la pluralité de cartes de phase et la carte à haut degré de confiance filtrée qui correspond à chacune de la pluralité de cartes de phase.

2. Procédé selon la revendication 1, dans lequel l'obtention de la carte d'amplitude conformément à la pluralité de cartes de phase comprend :

l'obtention (0612) d'une pluralité de valeurs de pixels moyennes, dans lequel chacune de la pluralité de valeurs de pixels moyennes est une valeur moyenne de valeurs de pixels qui se trouvent à une même position de la pluralité de cartes de phase ; et

l'obtention (0614) de la carte d'amplitude conformément à la pluralité de valeurs de pixels moyennes.

3. Procédé selon la revendication 1, dans lequel la segmentation de chacune de la pluralité de cartes de phase en la carte à faible niveau de confiance et la carte à haut niveau de confiance conformément à la carte de confiance comprend :

la division d'une pluralité de pixels de la carte de confiance en pixels à haut niveau de confiance et en pixels à faible niveau de confiance, dans lequel chacun des pixels à haut niveau de confiance a une valeur de pixel supérieure ou égale à un seuil de confiance, et chacun des pixels à faible niveau de confiance a une valeur de pixel inférieure au seuil de confiance ;

la détermination d'une zone d'image de chacune de la pluralité de cartes de phase présentant des pixels qui correspondent aux pixels à haut niveau de confiance en tant que carte à haut niveau de confiance ; et

la détermination d'une zone d'image de chacune de la pluralité de cartes de phase présentant des pixels qui correspondent aux pixels à faible niveau de confiance en tant que carte à faible niveau de confiance.

4. Procédé selon la revendication 1 ou 3, comprenant en outre :

l'obtention de chacune de la pluralité de cartes de phase filtrées en reliant la carte à faible niveau de confiance et la carte à haut niveau de confiance filtrée.

5. Procédé selon l'une quelconque des revendications 1 à 4, dans lequel le mécanisme de filtrage bilatéral conjoint est défini comme suit :

$$J_p = \frac{1}{k_v} \sum_{q \in \Omega} I_q f(\|p - q\|) g(\|I_p' - I_q'\|)$$

et dans lequel

$$k_p = \sum_{q \in \Omega} f(\|p - q\|) g(\|I_p' - I_q'\|)$$

$J_p$ est une valeur de pixel de sortie,

$k_p$ est une somme de poids,
$\Omega$ est une fenêtre de filtrage,
p est une coordonnée d'un pixel à filtrer de l'une de la pluralité de cartes de phase,
q est une coordonnée d'un pixel de l'une de la pluralités de cartes de phase qui se trouve dans la fenêtre de filtrage,
$I_q$ est une valeur de pixel du pixel indiqué par q,
$I_p'$ est une valeur de pixel d'un pixel de la carte directrice qui correspond au pixel à filtrer indiqué par $p$,
$I_q'$ est une valeur de pixel d'un pixel de la carte directrice qui correspond au pixel indiqué par q, et

f et g sont des fonctions de distribution de poids, les fonctions de distribution de poids comprenant une fonction gaussienne.

6. Procédé selon la revendication 5, dans lequel les poids comprennent un premier poids $f(\|p\text{-}q\|)$ et un second poids $g(\|I_p' - I_q'\|)$ et dans lequel :

le premier poids $f(\|p - q\|)$ est déterminé conformément à une différence entre p et q, et

le second poids $g(\|I_p' - I_q'\|)$ est déterminé conformément à une différence entre la valeur de pixel $I_p'$ et la valeur de pixel $I_q'$.

7. Procédé selon l'une quelconque des revendications 1 à 6, comprenant en outre :
le filtrage simultané (065) de la pluralité de cartes de phase en traitant la pluralité de cartes de phase en parallèle, moyennant quoi la pluralité des cartes de phase filtrées est obtenue.

8. Procédé selon l'une quelconque des revendications 1 à 7, comprenant en outre :
la réalisation d'au moins un anticrénelage et un filtrage moyen sur l'image de profondeur.

9. Appareil (100) d'acquisition d'une image de profondeur, comprenant :

un émetteur de lumière (10), configuré pour émettre une lumière vers un objet cible ;
un récepteur de lumière (20), configuré pour recevoir une lumière réfléchie par l'objet cible et réaliser un échantillonnage à plusieurs reprises, afin d'obtenir une pluralité de cartes de phase ;
et
un processeur (30), configuré pour le procédé selon l'une quelconque des revendications 1 à 8.

10. Dispositif électronique (1000) comprenant :

un boîtier (200) ; et

un appareil (100) reçu dans le boîtier et comprenant :

un émetteur de lumière (10), configuré pour émettre une lumière vers un objet cible ;
un récepteur de lumière (20), configuré pour recevoir une lumière réfléchie par l'objet cible et réaliser un échantillonnage à plusieurs reprises, afin d'obtenir une pluralité de cartes de phase ; et
un processeur (30), configuré pour réaliser le procédé selon l'une quelconque des revendications 1 à 8.

11. Dispositif électronique selon la revendication 10, dans lequel :

le boîtier définit un trou ; et
l'appareil peut être rétracté à l'intérieur du boitier et étiré hors de celui-ci par le trou.

12. Dispositif électronique selon la revendication 10, comprenant en outre un écran d'affichage, l'appareil étant situé sous l'écran d'affichage.

02

| EMITTING LIGHT TO A TARGET OBJECT |

04

| RECEIVING LIGHT REFLECTED BY THE TARGET OBJECT AND PERFORMING SAMPLING A NUMBER OF TIMES, TO OBTAIN MULTIPLE PHASE MAPS |

06

| FILTERING THE MULTIPLE PHASE MAPS, TO OBTAIN MULTIPLE FILTERED PHASE MAPS |

08

| FORMING THE DEPTH IMAGE ACCORDING TO THE MULTIPLE FILTERED PHASE MAPS |

FIG. 1

100

APPARATUS FOR ACQUIRING
A DEPTH IMAGE

10

| LIGHT EMITTER |

20

| LIGHT RECEIVER |

30

| PROCESSOR |

FIG. 2

| | | | | |
|---|---|---|---|---|
| | | | | |
| | Q₁ | | | |
| | | | | |
| | | | | |

FIRST PHASE
MAP

| | | | | |
|---|---|---|---|---|
| | | | | |
| | Q₂ | | | |
| | | | | |
| | | | | |

SECOND PHASE
MAP

| | | | | |
|---|---|---|---|---|
| | | | | |
| | Q₃ | | | |
| | | | | |
| | | | | |

THIRD PHASE
MAP

| | | | | |
|---|---|---|---|---|
| | | | | |
| | Q₄ | | | |
| | | | | |
| | | | | |

FOURTH PHASE
MAP

| | | | | |
|---|---|---|---|---|
| | | | | |
| | Q | | | |
| | | | | |
| | | | | |

AMPLITUDE
MAP

FIG. 3

06

OBTAINING AN AMPLITUDE MAP ACCORDING TO THE MULTIPLE
PHASE MAPS                                                            061

FILTERING THE MULTIPLE PHASE MAPS BY EMPLOYING A JOINT
BILATERAL FILTERING SCHEME AND USING THE AMPLITUDE MAP
AS A GUIDING MAP                                                      062

FIG. 4

06

061

OBTAINING AN AMPLITUDE MAP ACCORDING TO THE MULTIPLE PHASE MAPS

063

OBTAINING A CONFIDENCE MAP BY FILTERING THE AMPLITUDE MAP

064

FILTERING THE MULTIPLE PHASE MAPS BY EMPLOYING A JOINT BILATERAL FILTERING SCHEME AND USING THE CONFIDENCE MAP AS A GUIDING MAP

FIG. 5

061

0612

OBTAINING MULTIPLE AVERAGE PIXEL VALUES, WHERE EACH OF THE MULTIPLE AVERAGE PIXEL VALUES IS AN AVERAGE VALUE OF PIXEL VALUES OF PIXELS THAT LOCATE AT A SAME POSITION OF THE MULTIPLE PHASE MAPS

0614

OBTAINING THE AMPLITUDE MAP ACCORDING TO THE MULTIPLE AVERAGE PIXEL VALUES

FIG. 6

064

0642

SEGMENTING EACH OF THE MULTIPLE PHASE MAPS INTO A LOW CONFIDENCE MAP AND A HIGH CONFIDENCE MAP ACCORDING TO THE CONFIDENCE MAP

FILTERING THE HIGH CONFIDENCE MAP OBTAINED FROM EACH OF THE MULTIPLE PHASE MAPS WITH THE JOINT BILATERAL FILTERING SCHEME TO OBTAIN A FILTERED HIGH CONFIDENCE MAP, WHERE EACH OF THE PLURALITY OF FILTERED PHASE MAPS IS OBTAINED BY PROCESSING THE LOW CONFIDENCE MAP OBTAINED FROM EACH OF THE PLURALITY OF PHASE MAPS AND THE FILTERED HIGH CONFIDENCE MAP THAT CORRESPONDS TO EACH OF THE MULTIPLE PHASE MAPS

0644

FIG. 7

CONFIDENCE MAP

LOW CONFIDENCE MAP

PHASE MAP

JOINT BILATERAL FILTERING SCHEME

HIGH CONFIDENCE MAP

FILTERED HIGH CONFIDENCE MAP

FILTERED PHASE MAP

FIG. 8

FILTERING
WINDOW

$I_q$

$I_p$

PHASE MAP

$I_q{}'$

$I_p{}'$

GUIDING MAP

$J_p$

FILTERED PHASE MAP

FIG. 9

EMITTING LIGHT TO A TARGET OBJECT

02

RECEIVING LIGHT REFLECTED BY THE TARGET OBJECT AND
PERFORMING SAMPLING A NUMBER OF TIMES, TO OBTAIN
MULTIPLE PHASE MAPS

04

FILTERING THE MULTIPLE PHASE MAPS SIMULTANEOUSLY BY
PROCESSING THE MULTIPLE PHASE MAPS IN PARALLEL, TO
OBTAIN THE MULTIPLE FILTERED PHASE MAPS

065

FORMING THE DEPTH IMAGE ACCORDING TO THE MULTIPLE
FILTERED PHASE MAPS

08

FIG. 10

1000

100

20  10

200

30

PROCESSOR

FIG. 11

1000

300

ELECTRONIC DEVICE

COMPUTER READABLE
STORAGE MEDIUM

PROCESSOR

30

COMPUTER
PROGRAMS

320

FIG. 12

**EP 3 629 055 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018042887 A1
- US 2011285910 A1

**Non-patent literature cited in the description**

- **CAI JIJI et al.** *Boundary-Preserving depth Upsampling Without Texture Copying Artifacts and Holes*